# EUROPEAN PATENT APPLICATION

(11) **EP 4 746 048 A1**
(43) Date of publication of application: **20.05.2026**
(21) Application number: 24863286.1
(22) Date of filing: 06.09.2024
(51) Int. Cl.: H01M 4/04, B30B 3/04, B30B 15/26

(54) **METHOD AND APPARATUS FOR MANUFACTURING ELECTRODE**

(30) Priority: 07.09.2023 KR 20230119020
(71) Applicant: LG Energy Solution, Ltd., Seoul 07335 (KR)
(72) Inventor: HAN, Seung Hee, Daejeon 34122 (KR); KWAK, Sang Min, Daejeon 34122 (KR); PARK, Yo Sub, Daejeon 34122 (KR); LEE, Nam Jeong, Daejeon 34122 (KR); SHIN, Dong Oh, Daejeon 34122 (KR); JUNG, Jong Hyun, Daejeon 34122 (KR); YANG, Jeong Min, Daejeon 34122 (KR); OH, Sol Seon, Daejeon 34122 (KR)
(74) Representative: Goddar, Heinz J.
(86) International application number: PCT/KR2024/013565
(87) International publication number: WO 2025/053707

(57) **Abstract**

A method for manufacturing an electrode according to the present disclosure includes an electrode film manufacturing step of manufacturing a sheet-like electrode film by passing a powder-type mixture between sheeting rollers and supplying the electrode film at a predetermined speed; an electrode manufacturing step of additionally feeding an electrode foil, and manufacturing an electrode by passing between the rolling rollers in a state where the electrode film and the electrode foil are laminated and bonding them to each other; a rolling roller control step of sensing the thickness of the electrode before the electrode is recovered and controlling the gap size between the rolling rollers and the rotational speed of the rolling rollers; and a feedback control step of feedback controlling the electrode film manufacturing step so that the thickness and supply speed of the electrode film are adjusted in accordance with the gap size between the rolling rollers or the rotational speed of the rolling rollers. The manufacturing method according to the present disclosure may suppress the occurrence of wrinkles in the electrode.

## Description

### TECHNICAL FIELD

The present application claims priority to Korean Patent Application No. 10-2023-0119020 filed on September 7, 2023 and Korean Patent Application No. 10-2024-0121915 filed on September 6, 2024 in the Republic of Korea, the disclosures of which are incorporated herein by reference.

The present disclosure relates to a method and a device for manufacturing an electrode, and more specifically, to a method and a device for manufacturing an electrode capable of suppressing or minimizing the thickness deviation and the occurrence of wrinkles of the electrode and further increasing production efficiency.

### BACKGROUND ART

Batteries that store electrical energy may be generally divided into primary batteries and secondary batteries. Primary batteries are disposable consumable batteries, whereas secondary batteries are rechargeable batteries manufactured using materials in which the oxidation and reduction processes between current and substances are repeatable.

That is, when a reduction reaction is performed on a material by current, the power is charged, and when an oxidation reaction is performed on a material, the power is discharged, and electricity is generated while such charging and discharging are repeatedly performed.

In general, types of secondary batteries include nickel cadmium batteries, nickel hydrogen batteries, lithium-ion batteries, and lithium-ion polymer batteries. These secondary batteries are applied and used not only in small products such as digital cameras, P-DVDs, MP3Ps, mobile phones, PDAs, portable game devices, power tools, and E-bikes, but also in large products requiring high power such as electric vehicles or hybrid vehicles, in power storage devices that store surplus generated power or renewable energy, and in power storage devices for backup.

Among them, lithium secondary batteries are generally manufactured by accommodating an electrode assembly in which a positive electrode (cathode), a separator, and a negative electrode (anode) are stacked in a case such as a cylindrical can or a prismatic pouch.

Each of the positive electrode and the negative electrode is manufactured by applying an electrode slurry to both surfaces (or one surface) of an electrode foil, which is a current collector. There are various methods for manufacturing the electrode slurry and bonding it to the electrode foil, but a method for manufacturing and laminating the electrode slurry as a thin electrode film like a film and bonding it is known in the art.

At this time, the electrode film and the electrode foil are manufactured into an electrode by rolling after bonding or simultaneously with bonding, and subsequent processing is performed to form an electrode tab (in a part where the electrode film is not covered and the electrode foil is exposed).

Meanwhile, in the method for manufacturing the electrode film, a process of sheeting a powder-type mixture including an active material, a carbon material, and a binder as main components is known in the art.

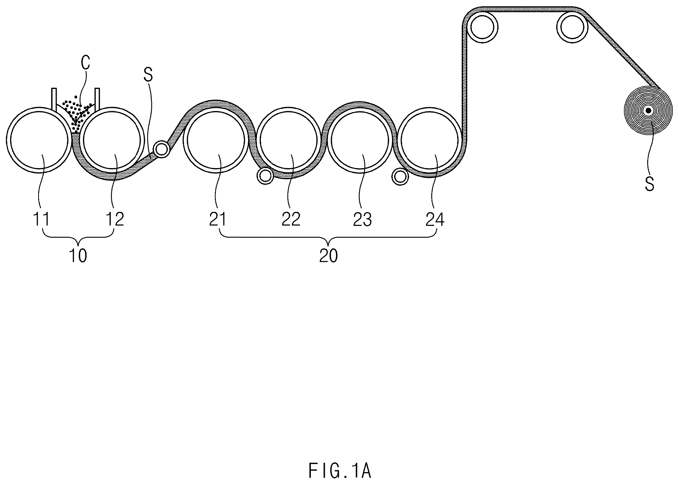

That is, as shown in FIG. 1a, which is a view showing a state in which a powder sheeting process and a calendering process are simplified, the powder sheeting process is performed by feeding a powder-type mixture C between the sheeting rollers 10: 11, 12. The powder-type mixture C fed between the sheeting rollers 10 is formed into a sheet-like electrode film S by applying pressure and shear force (due to the difference in rotational speed between the sheeting rollers).

Then, after the powder sheeting process, the calendering process of thinning the electrode film S to the target thickness is continuously performed.

In the calendering process, the electrode film S is thinly formed while passing between the neighboring calendering rollers 20: 21, 22, 23, 24 continuously. At this time, the gap and the ratio of the difference in rotational speed (main speed ratio) between the neighboring calendering rollers 20, and the temperature of the calendering rollers 20 become process variables.

Accordingly, the gap and rotational speed between the calendering rollers 20 may be appropriately adjusted to manufacture an electrode film S having the target thickness and density.

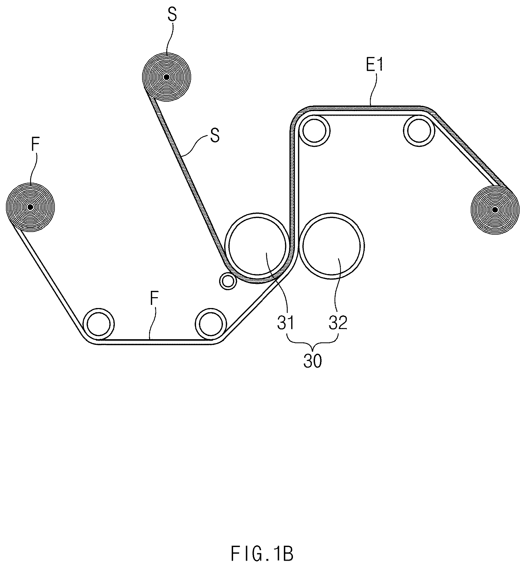

And, as shown in FIG. 1b, which is a simplified view showing a state in which an electrode is manufactured by bonding and rolling an electrode film S and an electrode foil F through a rolling process, the electrode film S is recovered in a roll form and then unwound and laminated together with the electrode foil F, and bonding and rolling are performed while passing between the rolling rollers 30: 31, 32 in the laminated state. Here, the rolling means that the electrode film S and the electrode foil F are compressed to have a predetermined thickness and density and to increase the bonding force.

And, depending on the process design, the powder sheeting process, the calendering process, and the rolling process may be configured to be performed continuously.

In this case, the rollers 10, 20, 30 are controlled so that the thickness of the electrode film S and the thickness of the electrode film S and the electrode foil F are individually controlled in each process.

However, if there is a difference in the thickness (and/or density) of the electrode film S in the preceding processes (powder sheeting process and calendering process), the rolling rollers 30 should be controlled in the rolling process to correct this.

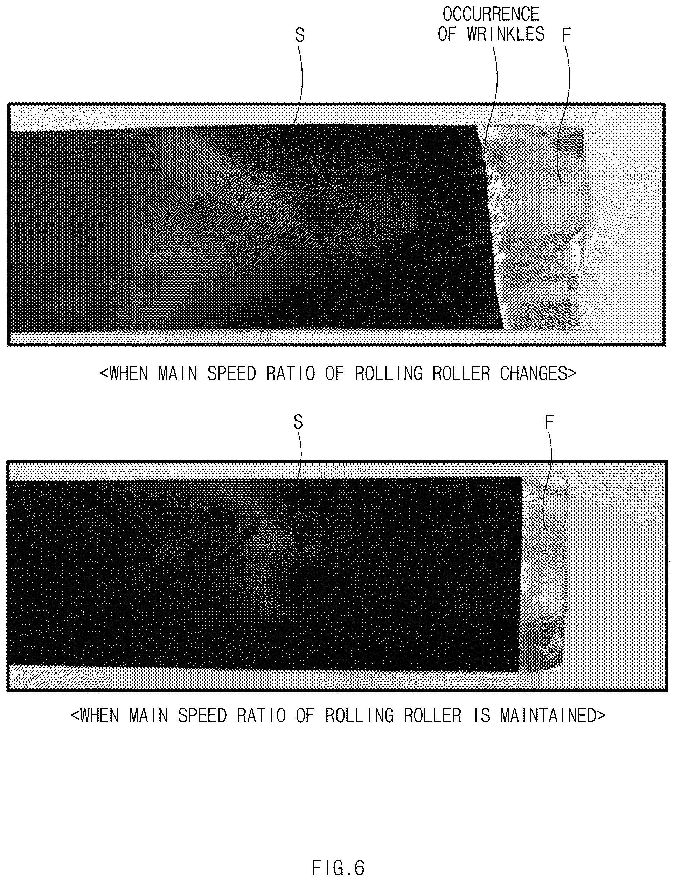

However, if there is a change in the gap or rotational speed between the rolling rollers 31, 32 during rolling, wrinkles were highly likely to occur near the boundary between the electrode foil F and the electrode film S (see FIG. 6).

### SUMMARY

### TECHNICAL PROBLEM

The present disclosure is directed to providing a method and a device for manufacturing an electrode in which a powder sheeting process, a calendering process, and a rolling process may be continuously performed to increase production efficiency, and in which the occurrence of wrinkles may be suppressed by controlling other processes based on the rolling rollers (the rotational speed of the rolling rollers is kept constant, but instead, the occurrence of wrinkles may be suppressed by feedback controlling the gap and rotational speed of the rollers of other processes).

### TECHNICAL SOLUTION

In order to achieve the above-described purpose, the present disclosure provides a method for manufacturing an electrode and a device for manufacturing an electrode.

A method for manufacturing an electrode according to the present disclosure includes an electrode film manufacturing step of manufacturing and supplying a sheet-like electrode film; an electrode manufacturing step of additionally feeding an electrode foil, and manufacturing an electrode by passing between the rolling rollers (in pairs) in a state where the electrode film and the electrode foil are laminated and bonding them to each other; a rolling roller control step of sensing the thickness of the electrode before the electrode is recovered and controlling at least one of the gap size between the rolling rollers or the rotational speed of the rolling rollers; and a feedback control step of feedback controlling the electrode film manufacturing step so that the thickness and supply speed of the electrode film are adjusted in accordance with the gap size between the rolling rollers or the rotational speed of the rolling rollers.

In the rolling roller control step, each rotational speed of rolling rollers is adjusted so that the main speed ratio, which is the rotating speed ratio, of the rolling rollers on both sides remains constant even if the rotational speed of the rolling rollers is controlled.

In the electrode film manufacturing step, a powder-type mixture is manufactured into a sheet-like electrode film by passing between sheeting rollers, and the electrode film manufacturing step includes a calendering step in which the thickness of the sheet-like electrode film is adjusted while the sheet-like electrode film passes between the plurality of calendering rollers.

In the feedback control step, the thickness and supply speed of the electrode film are controlled by controlling at least one of the gap size between the calendering rollers or the rotational speed of the calendering rollers.

In the feedback control step, the thickness and supply speed of the electrode film are controlled by controlling the operation of at least one of the gap size between the sheeting rollers or the rotational speed of the sheeting rollers.

The electrode film manufacturing step includes a step of sensing the thickness of the electrode film after passing through the sheeting rollers and before entering the calendering rollers; and a step of sensing the thickness of the electrode film and the electrode foil after the electrode film passes through the calendering rollers and before entering the rolling rollers in a state where the electrode film and the electrode foil are laminated. Then, the sensed data is transmitted to the feedback control unit that performs the feedback control step.

In the feedback control step, the thickness change on the path along which the electrode film moves in the electrode film manufacturing step is measured and compared, and it is determined whether to control the operation of the sheeting rollers or the operation of the calendering rollers.

The electrode film includes a first electrode film laminated on one side surface of the electrode foil with the electrode foil interposed therebetween, and a second electrode film laminated on the other side surface of the electrode foil.

In the electrode film manufacturing step, the first electrode film is supplied to one side surface of the electrode foil at a predetermined speed, and the second electrode film is supplied to the other side surface of the electrode foil at a predetermined speed.

In the electrode manufacturing step, the electrode foil passes between the rolling rollers in a state where the first electrode film and the second electrode film are laminated on each of the one side surface and the other side surface.

The electrode film manufacturing step includes a step of sensing at least one of the thickness of the first electrode film before reaching the rolling rollers or the thickness of the second electrode film before reaching the rolling rollers.

In the feedback control step, it is determined whether to adjust the thickness of the first electrode film or the thickness of the second electrode film.

A device for manufacturing an electrode according to the present disclosure includes an electrode film manufacturing device including sheeting rollers that apply pressure and shear force to the powder-type mixture to process it into a sheet-like electrode film when the powder-type mixture is fed and calendering rollers that apply pressure to the electrode film passing through the sheeting rollers to process it to a target thickness; a rolling roller that applies pressure to the electrode foil and the electrode film manufactured and supplied by the electrode film manufacturing device so that they are bonded when supplied in a laminated state to manufacture them into an electrode; and a feedback control unit that receives data from an electrode thickness sensor disposed before the electrode reaches a recovery unit and sensing the thickness of the electrode, and controls the gap size between the rolling rollers and the rotational speed of the rolling rollers, wherein the feedback control unit feedback controls the electrode film manufacturing device so that the thickness and supply speed of the electrode film are adjusted in accordance with the gap size between the rolling rollers and the rotational speed of the rolling rollers.

The feedback control unit may individually control the gap size between the sheeting rollers and the rotational speed of the sheeting rollers, and the gap size between the calendering rollers and the rotational speed of the calendering rollers.

The electrode film manufacturing device, so that the electrode film is individually supplied from each of both sides with the electrode foil interposed therebetween, includes a first electrode film manufacturing device that manufactures and supplies a first electrode film laminated on one side surface of the electrode foil; and a second electrode film manufacturing device that manufactures and supplies a second electrode film laminated on the other side surface of the electrode foil, wherein the first electrode film manufacturing device and the second electrode film manufacturing device are disposed on one side and the other side of the rolling rollers, respectively, with the rolling rollers interposed therebetween.

The first electrode film manufacturing device includes first electrode film thickness sensors that sense the thickness of the first electrode film, and the second electrode film manufacturing device includes second electrode film thickness sensors that sense the thickness of the second electrode film, wherein each of the first electrode film thickness sensors and the second electrode film thickness sensors is connected to the feedback control unit to enable data transmission.

The first electrode film thickness sensor includes a front first electrode film thickness sensor that senses the thickness of the first electrode film after passing through the sheeting rollers and before entering the calendering rollers; and a rear first electrode film thickness sensor that senses the thickness of the first electrode film and the electrode foil after the first electrode film passes through the calendering rollers and before entering the rolling rollers in a state where the first electrode film and the electrode foil are laminated.

The second electrode film thickness sensor includes a front second electrode film thickness sensor that senses the thickness of the second electrode film after passing through the sheeting rollers and before entering the calendering rollers; and a rear second electrode film thickness sensor that senses the thickness of the second electrode film after passing through the calendering rollers and before entering the rolling rollers.

### ADVANTAGEOUS EFFECTS

The present disclosure having the above configuration may solve the problem of the occurrence of wrinkles on the electrode foil by maintaining the rotational speed (and main speed ratio) between the rolling rollers constant even while the electrode film thickness is adjusted.

That is, in the present disclosure, the thickness and density of the electrode film are feedback controlled while the electrode foil and the electrode film are rolled, so that an electrode of constant quality may be manufactured.

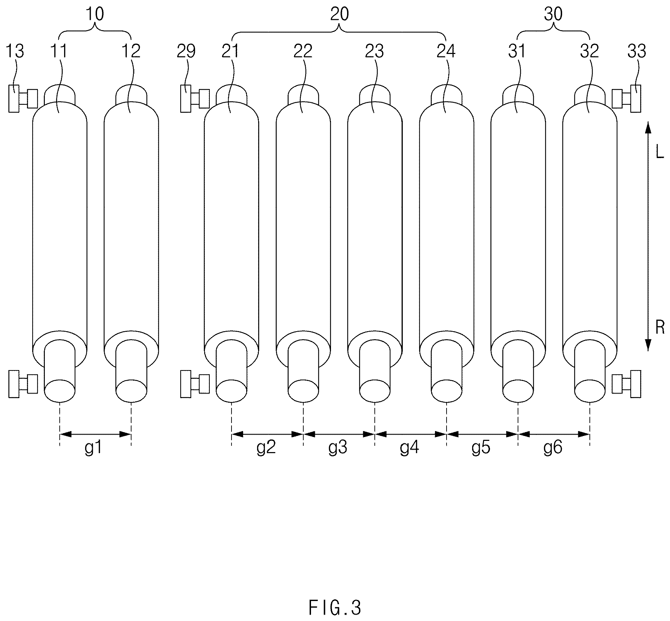

In the present disclosure, since feedback control may be performed individually in each of the powder sheeting process in which the electrode film is manufactured from a powder-type mixture and the calendering process in which the thickness of the electrode film is thinned, the thickness and density of the electrode film may be controlled more precisely. In particular, individual automatic correction may be performed by distinguishing an operator side (OS) and a driver side (DS). For example, the left L gap and the right R gap between the rollers based on FIG. 3 may be adjusted independently to more accurately balance the left and right thicknesses of the electrode film.

### BRIEF DESCRIPTION OF THE DRAWINGS

FIG. 1a is a view showing a state in which a powder sheeting process and a calendering process are simplified.
FIG. 1b is a simplified view showing a state in which an electrode is manufactured by bonding and rolling an electrode film and an electrode foil through a rolling process.
FIG. 2 is a simplified view showing the overall appearance of an electrode manufacturing device for manufacturing an electrode in which an electrode film is laminated on one surface of an electrode foil.
FIG. 3 is a view showing a state in which sheeting rollers, calendering rollers, and rolling rollers are disposed.
FIG. 4a is a simplified view showing the overall appearance of an electrode manufacturing device for manufacturing an electrode in which electrode films are laminated on both surfaces of an electrode foil.
FIGS. 4b and 4c are views showing variations of the arrangement of the rollers in FIG. 4a, respectively.
FIG. 5 is a flow chart showing the order of feedback control in a method for manufacturing an electrode according to the present disclosure.
FIG. 6 is a view showing a state in which wrinkles occur due to changes in the main speed ratio of the rolling rollers and a state in which the occurrence of wrinkles is suppressed by maintaining the main speed ratio of the rolling rollers constant.

### DETAILED DESCRIPTION

Hereinafter, the present disclosure will be described in detail with reference to the accompanying drawings to enable those having ordinary skill in the technical field pertaining to the present disclosure to easily carry out the present disclosure. However, the present disclosure may be embodied in many different forms and is not limited by the embodiments described herein.

To clearly describe the present disclosure, parts irrelevant to the description are omitted, and the identical reference numerals are affixed to the identical or similar elements throughout the specification.

Additionally, the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

The present disclosure relates to a method and a device for manufacturing an electrode in which a powder sheeting process, a calendering process, and a rolling process are continuously performed to increase production efficiency and to suppress the occurrence of wrinkles in the electrode, and hereinafter, embodiments of the present disclosure will be described in more detail with reference to the accompanying drawings.

### Embodiment 1

The present disclosure provides, as Embodiment 1, a device for manufacturing an electrode in which an electrode (E1: an electrode in which an electrode film is laminated only on one surface of an electrode foil, E2: an electrode in which an electrode film is laminated on both surfaces of an electrode foil) may be manufactured from a powder-type mixture C, that is, in which a powder sheeting process, a calendering process, and a rolling process may be continuously performed.

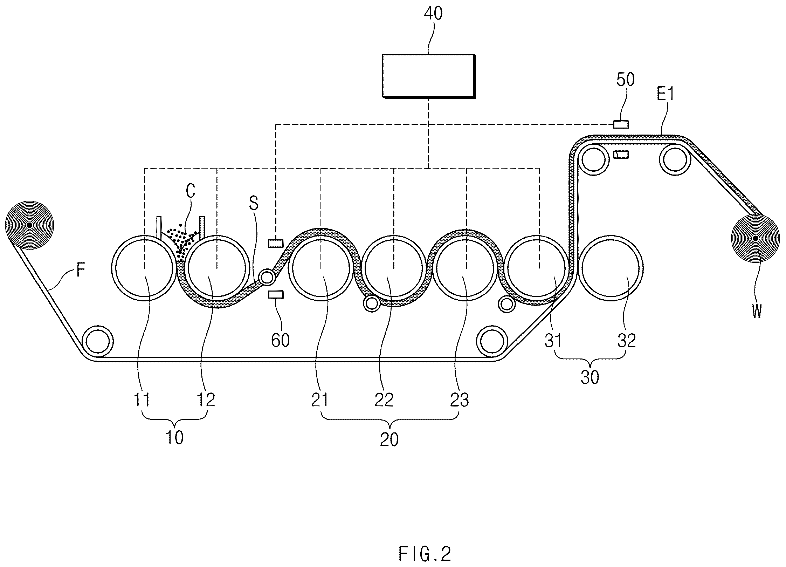

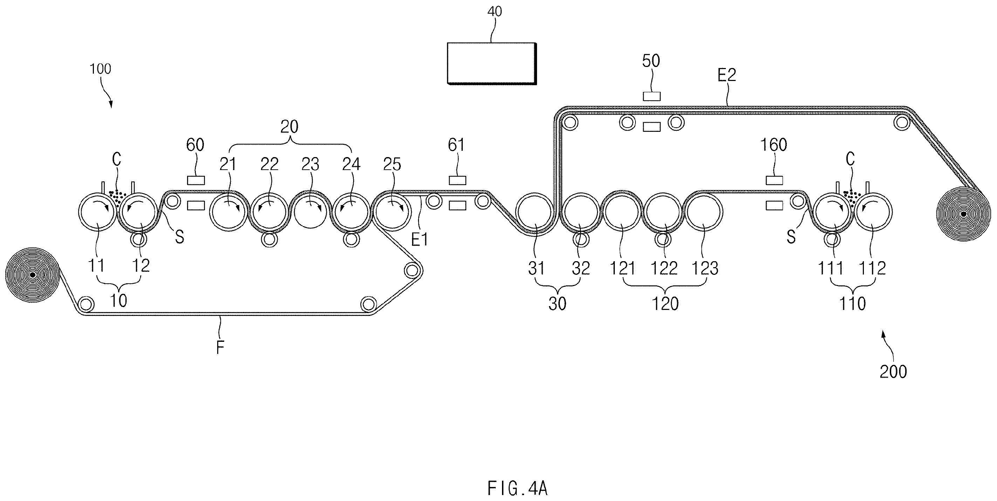

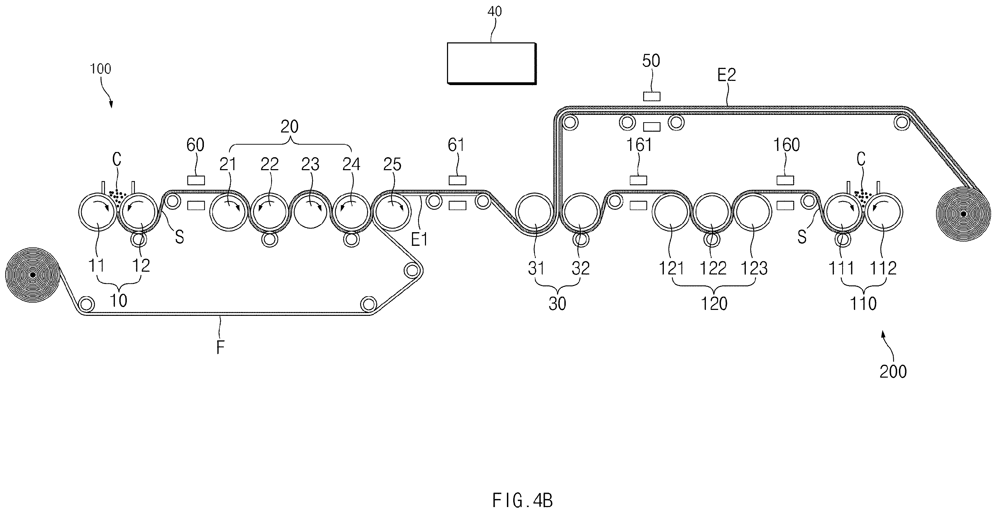

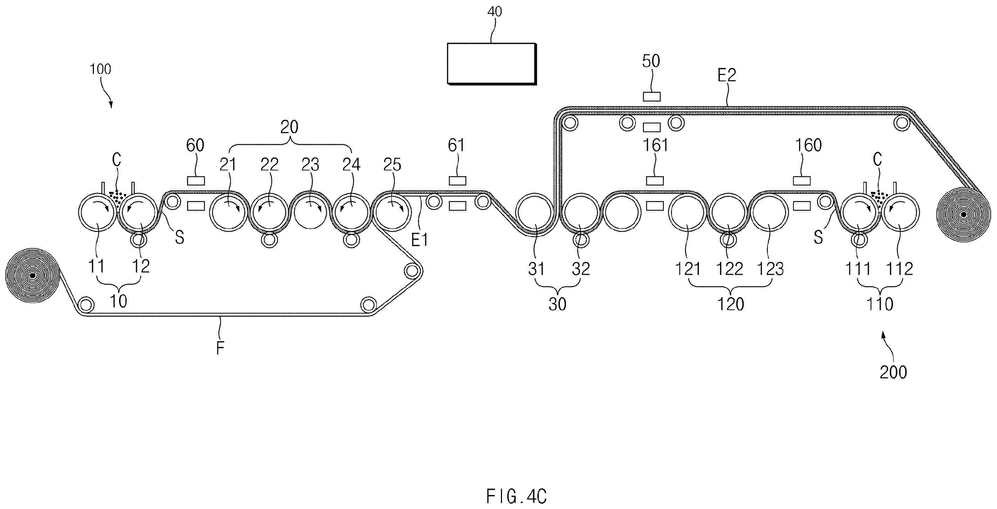

FIG. 2 is a simplified view showing the overall appearance of an electrode manufacturing device for manufacturing an electrode in which an electrode film is laminated on one surface of an electrode foil, FIG. 3 is a view showing a state in which sheeting rollers, calendering rollers, and rolling rollers are disposed, and FIG. 4 is a simplified view showing the overall appearance of an electrode manufacturing device for manufacturing an electrode in which electrode films are laminated on both surfaces of an electrode foil.

The device for manufacturing an electrode provided in this embodiment is configured to include an electrode film manufacturing device, a rolling roller 30, and a feedback control unit 40. And, the feedback control unit 40 feedback controls the electrode film manufacturing device according to the operating state of the rolling rollers 31, 32 and the thickness (and/or density) of the electrodes E1, E2. Here, 'feedback control' means controlling the electrode film manufacturing device to adjust the thickness (and density) of the input electrode film S based on the output electrodes E1, E2.

The electrode film manufacturing device manufactures an electrode film S in the form of a sheet having a predetermined thickness from the powder-type mixture C. And, at this time, the electrode film manufacturing device adjusts the thickness (and density) of the electrode film S according to the rolling roller 30.

The electrode film manufacturing device includes a pair (or more) of sheeting rollers 10: 11, 12 that process the powder-type mixture C into a sheet-like electrode film S by applying pressure and shear force to the powder-type mixture C when the powder-type mixture C is fed. The sheeting rollers 11, 12 that form a pair are disposed so that a gap g1 is formed by a predetermined distance and are heated to a predetermined temperature range. Then, while the powder-type mixture C is fed between the sheeting rollers 11, 12, the sheeting rollers 11, 12 that form a pair rotate so that a speed difference occurs between them. Accordingly, the powder-type mixture C is molded into a sheet-like electrode film S by applying pressure and shear force thereto.

At this time, since the molded electrode film S has uneven thickness and density and does not have a target thickness, a calendering process is required. That is, the electrode film manufacturing device includes calendering rollers 20: 21, 22, 23 that apply pressure to the electrode film S passing through the sheeting rollers 11, 12 to process it to the target thickness. For reference, the number of calendering rollers 20 is determined according to the specifications of the electrode film required according to the process specifications, as will be described later, and may be selectively added or omitted.

Meanwhile, in the powder sheeting process, the greater the main speed ratio between the sheeting rollers (the greater the difference in rotational speed between the sheeting rollers), the smaller the thickness of the electrode film, and the smaller the gap g1 between the sheeting rollers, the higher the density.

The calendering rollers 21, 22, 23 are provided in two or more, are cooled or heated to have a predetermined temperature range, and are disposed so that gaps g2, g3 are formed between the neighboring calendering rollers 21, 22, 23 within a predetermined range, respectively. And, the calendering rollers also rotate so that a speed difference occurs between the neighboring ones.

Accordingly, the electrode film S passing between the sheeting rollers 11, 12 is processed to have a targeted thickness and density while passing between the calendering rollers 21, 22, 23. At this time, the gap g3 is disposed to be the same as or smaller than the gap g2 formed at the front side toward the rear side so that the thickness of the electrode film S gradually decreases (or the density gradually increases), and the main speed ratio of the neighboring calendering rollers 21, 22, 23 is also set to change gradually.

As in the powder sheeting process, in the calendering process, the greater the main speed ratio between the calendering rollers 21, 22, 23 (the greater the difference in rotational speed between the calendering rollers), the smaller the thickness of the electrode film S, and the smaller the gaps g2, g3 between the calendering rollers 21, 22, 23, the higher the density.

In addition, the sheeting rollers 11, 12 and the calendering rollers 21, 22, 23 are coupled to an external device (not shown) to enable temperature control and control of each rotational speed, and are also coupled to sliding devices 13, 29 composed of a motor or a screw device or a cylinder that slides by pneumatic or hydraulic pressure to adjust the size of the gaps g1, g2, g3 with the neighboring ones.

The sliding devices 13, 29, 33 may be individually controlled and are respectively disposed on both sides of the rollers, so that individual automatic correction may be performed by distinguishing an operator side (OS) and a driver side (DS). That is, the adjustment of the left L gap and the right R gap between the rollers may be performed independently, so that the occurrence of a difference between the left thickness and the right thickness of the electrode film may be prevented. Such external devices and sliding devices 13, 29, 33 are controlled by the feedback control unit 40 to be described later.

And, the rolling rollers 30: 31, 32 provided in this embodiment apply pressure to manufacture the electrode E1 so that when the electrode film S and the electrode foil F manufactured and supplied by the electrode film manufacturing device are supplied in a laminated state, they are compressed in a direction where adhesion and thickness are reduced.

Meanwhile, one 31 of the rolling rollers 30: 31, 32 is disposed with a predetermined gap from the outermost calendering roller 23. In this case, the rolling roller 31 may be disposed to be completely separated from the calendering roller 23 depending on the size of the gap, or may be selectively disposed to be used as one of the calendering rollers. And, another rolling roller 32 is configured to be slidable by a sliding device 33 so that gap adjustment is possible. Of course, the rolling roller 31 disposed toward the outermost calendering roller may also be coupled to a sliding device (not shown).

The electrode film is fed in a combined (laminated) state with the electrode foil F before being fed between the rolling rollers 31, 32. That is, the electrode film S and the electrode foil F are bonded by applying a predetermined pressure between the rolling rollers 31, 32, and are simultaneously compressed to have a target thickness.

The rolling rollers 31, 32 are also coupled to an external device (not shown) to enable temperature control and control of each rotational speed. And, the sliding device 33 is operated by a motor or pneumatic or hydraulic pressure, and the external device and the sliding devices 33 are controlled by the feedback control unit 40 described later.

Meanwhile, as shown in FIG. 2, before the electrode E1 manufactured by passing between the rolling rollers 31, 32 in a state where the electrode film S and the electrode foil F are laminated reaches the recovery unit W, an electrode thickness sensor 50 that senses the thickness of the electrode E1 is disposed.

The thickness data sensed by the electrode thickness sensor 50 is transmitted to the feedback control unit 40. The feedback control unit 40 controls the gap size between the rolling rollers 31, 32 and the rotational speed of the rolling rollers 31, 32 according to the thickness data.

For reference, it is known that the wrinkles occurring as shown in FIG. 6 are more affected by the change in the rotational speed difference (change in the main speed ratio) of the rolling rollers 31, 32 than by the change in the gap size of the rolling rollers 31, 32. Therefore, the feedback control unit 40 may control the change in the gap size of the rolling rollers 31, 32 rather than the change in the main speed ratio of the rolling rollers 31, 32.

And, the feedback control unit 40 feedback controls the electrode film manufacturing device so that the thickness and supply speed of the electrode film S are adjusted in accordance with the gap size between the rolling rollers 31, 32 and the rotational speed and main speed ratio of the rolling rollers 31, 32.

That is, the feedback control unit 40 controls the gap size between the sheeting rollers 11, 12 and the rotational speed of the sheeting rollers 11, 12, and the gap size between the calendering rollers 21, 22, 23 and the rotational speed of the calendering rollers 21, 22, 23, based on the rotational speed of the rolling rollers 31, 32.

Therefore, when the thickness of the electrode E1 is to be reduced or increased, and when the input speed of the electrode film S is to be increased or decreased, the feedback control unit 40 may adjust the thickness of the electrode E1 by maintaining the rotational speed (and the main speed ratio) of the rolling rollers 31, 32 constant and adjusting the gap size and rotational speed of the sheeting rollers 10 and the calendering rollers 20.

Thus, by minimizing or preventing the change in the main speed ratio of the rolling rollers 31, 32, it is possible to prevent the occurrence of wrinkles in the portion of the electrode where the electrode foil is exposed (not covered by the electrode film), as shown in FIG. 6.

For reference, three calendering rollers 20: 21, 22, 23 are provided in FIG. 2, and four calendering rollers 20: 21, 22, 23, 24 are provided in FIG. 3. That is, the number of the calendering rollers 20: 21, 22, 23 is determined according to the process situation or specifications or the target specifications of the electrode film and the electrode, and the calendering rollers 20 may be configured to selectively add or remove the calendering roller 24. In addition, each of the gaps g2, g3, g4, g5, g6 between the calendering rollers 21, 22, 23, 24 and the rolling rollers 31, 32 are configured to be independently adjustable.

The configuration described above manufactures an electrode E1 in which an electrode film S is laminated on only one surface of the electrode foil F, but the electrode manufacturing device provided in this embodiment may manufacture an electrode E2 in which electrode films S are laminated on both surfaces of the electrode foil F.

That is, referring to FIG. 4a, which shows a simplified view of the overall appearance of an electrode manufacturing device for manufacturing an electrode E2 where electrode films S are laminated on both surfaces of the electrode foil F, and FIGS. 4b and 4c, in which the configuration of the rollers in FIG. 4a is modified, the electrode film manufacturing device includes a first electrode film manufacturing device 100 and a second electrode film manufacturing device 200 so that the electrode film S is individually supplied from each side with the electrode foil F interposed therebetween.

The first electrode film manufacturing device 100 is configured to manufacture and supply a first electrode film (the electrode film supplied from the left in FIG. 4) laminated on one side surface of the electrode foil F, and is configured to include sheeting rollers 10: 11, 12 for processing a powder mixture C into a sheet-like electrode film S and calendering rollers 20: 21, 22, 23, 24 for thinning the electrode film S, as described above. And, a roller 25 for inducing the combination of the electrode film S and the electrode foil F may be added.

The second electrode film manufacturing device 200 is configured to manufacture and supply a second electrode film (the electrode film supplied from the left of the right side in FIG. 4) laminated on the other side surface of the electrode foil F, and is configured to include sheeting rollers 10: 11, 12 for processing a powder-type mixture C into a sheet-like electrode film S and calendering rollers 20: 21, 22, 23, 24 for thinning the electrode film S, as in the first electrode film manufacturing device 100.

That is, the first electrode film manufacturing device 100 and the second electrode film manufacturing device 200 are disposed on one side and the other side of the rolling rollers 31, 32, respectively, with the rolling rollers 31, 32 interposed therebetween to continuously supply the first electrode film and the second electrode film.

And, the first electrode film manufacturing device 100 includes first electrode film thickness sensors 60, 61 that sense the thickness of the first electrode film, and the second electrode film manufacturing device 200 includes second electrode film thickness sensors 160, 161 that sense the thickness of the second electrode film. Each of the first electrode film thickness sensors 60, 61 and the second electrode film thickness sensors 160, 161 is connected to the feedback control unit 40 to enable data transmission.

The first electrode film thickness sensor includes a front first electrode film thickness sensor 60 that senses the thickness of the first electrode film after passing through the sheeting rollers 10 and before entering the calendering rollers 20, and a rear first electrode film thickness sensor 61 that senses the thickness of the first electrode film and the electrode foil after the first electrode film passes through the calendering rollers 20 and before entering the rolling rollers 30 in a state where the first electrode film and the electrode foil F are laminated.

Therefore, the feedback control unit 40 may sense the thickness of the first electrode film passing through the sheeting rollers 10 and the thickness of the first electrode film passing through the calendering rollers 20, and may determine whether to control the sheeting rollers 10 or the calendering rollers 20, or both according to a predetermined logic. Next, the gap and/or rotational speed of the determined rollers 10, 20 may be adjusted to adjust the thickness of the first electrode film that is fed into the rolling rollers 31, 32.

Likewise, the second electrode film thickness sensor also includes a front second electrode film thickness sensor 160 that senses the thickness of the second electrode film after passing through the sheeting rollers 110 and before entering the calendering rollers 120, and a rear second electrode film thickness sensor 161 that senses the thickness of the second electrode film after passing through the calendering rollers 120 and before entering the rolling rolls 30.

And, the feedback control unit 40 senses the thickness of the second electrode film passing through the sheeting rollers 110 and the thickness of the second electrode film passing through the calendering rollers 120, and determines whether to control the sheeting rollers 110 or the calendering rollers 120, or both according to a predetermined logic. Next, the gap and/or rotational speed of the determined rollers 110, 120 may be adjusted to adjust the thickness of the second electrode film that is fed into the rolling rollers 30.

Meanwhile, as shown in FIG. 4a, the calendering rollers may be continuously disposed so that the thickness of the electrode film is adjusted while passing through each roller. However, depending on the process arrangement situation and for the purpose of more accurately monitoring the thickness adjustment situation, the second electrode film thickness sensor 161 may be disposed separately or spaced apart from the rolling rollers for further arrangement.

That is, as shown in FIG. 4b, the calendering rollers 121, 122, 123 may be disposed spaced apart from the rolling rollers 31, 32 for further arrangement of the second electrode film thickness sensor 161.

Additionally, in order to adjust the tension of the electrode film entering the rolling rollers as they are spaced apart, a tensioning roller may be selectively added between the calendering roller 121 and the rolling roller 32 adjacent to each other, as shown in FIG. 4c. Of course, other types of tensioning devices (not shown) may be selectively added in place of the tensioning roller.

Therefore, the configuration of the device provided in this embodiment for manufacturing the electrode E2 in which electrode films S are laminated on both surfaces of the electrode foil F is based on the configuration that the calendering rollers are disposed continuously (so that a predetermined gap is formed) as shown in FIG. 4a, but the calendering rollers may be disposed so that they are divided into two parts (or more in some cases) and the divided parts are spaced apart as shown in FIGS. 4b and 4c.

And, in the case of continuous arrangement (as in FIG. 4a), the second electrode film thickness sensor 161 is omitted due to space constraints, but in the case of spaced apart arrangement, the second electrode film thickness sensor 161 and/or the tensioning device may be selectively added if necessary.

In addition, the first electrode film thickness sensors 60, 61 for sensing the thickness of the first electrode film, the second electrode film thickness sensors 160, 161 for sensing the thickness of the second electrode film, and the electrode thickness sensor 50 may be of the same specifications, but the specifications may vary depending on the environment in which they are disposed, and each thickness of the left and right sides of the rollers (see 'L' and 'R' in FIG. 3) is measured and transmitted to the feedback control unit 40. And, the feedback control unit 40 also individually controls the left gap and the right gap between the neighboring rollers.

### Embodiment 2

The present disclosure provides, as Embodiment 2, a method for manufacturing an electrode that may manufacture an electrode using the device for manufacturing an electrode provided as Embodiment 1 above.

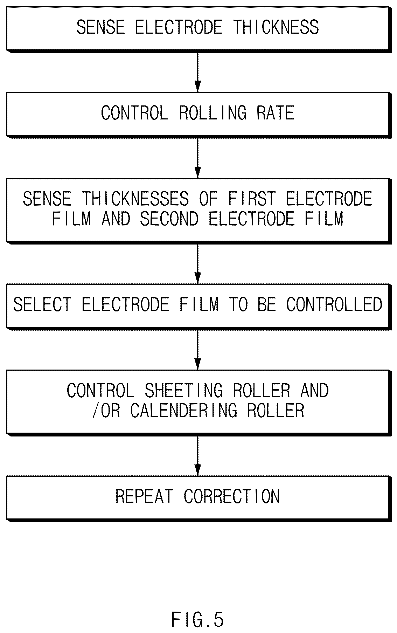

FIG. 5 is a flow chart showing the order of feedback control in a method for manufacturing an electrode according to the present disclosure, and FIG. 6 is a view showing a state in which wrinkles occur due to changes in the main speed ratio of the rolling rollers and a state in which the occurrence of wrinkles is suppressed by maintaining the main speed ratio of the rolling rollers constant.

The method for manufacturing an electrode according to the present disclosure is performed in the order of manufacturing an electrode film S, combining (laminating) the electrode film S and the electrode foil F, rolling the combined electrode film S and electrode foil F, and recovering electrodes E1, E2 manufactured by rolling, wherein feedback control of the previous step is performed according to the thickness of the manufactured electrode.

The method for manufacturing an electrode provided in this embodiment includes an electrode film manufacturing step, an electrode manufacturing step, a rolling roller control step, and a feedback control step.

In the electrode film manufacturing step, the powder-type mixture C is manufactured into a sheet-like electrode film S by passing between sheeting rollers 10, and the electrode film S is supplied at a predetermined speed. At this time, as described above, the electrode film S passes through calendering rollers 20 before reaching the rolling rollers 30.

Therefore, the electrode film manufacturing step includes a calendering step in which the thickness of the electrode film S is adjusted while the sheet-like electrode film S passes between the plurality of calendering rollers 20.

Additionally, the electrode film manufacturing step includes a step of sensing the thickness of the electrode film S after passing through the sheeting rollers 10 and before entering the calendering rollers 20, and a step of sensing the thickness of the electrode film S and the electrode foil F after the electrode film passes through the calendering rollers 20 and before entering the rolling rollers 30 in a state where the electrode film S and the electrode foil F are laminated. Then, the sensed data is transmitted to the feedback control unit 40 that performs a feedback control step to be described later.

In the electrode manufacturing step, the electrode foil F is additionally fed, and the electrode film S passing through the calendering rollers 20 and the electrode foil F are combined (laminated). The electrode film S and the electrode foil F pass between the rolling rollers 30 in a laminated state and are bonded to form an electrode E1. Then, the electrode is wound into a roll form in the recovery unit W and recovered.

In this case, the electrode passes through an electrode thickness sensor 50 that senses the thickness of the electrode before reaching the recovery unit. The electrode thickness sensor 50 senses the thickness of the electrode and transmits the sensed data to the feedback control unit 40.

In the rolling roller control step, the feedback control unit 40 controls the gap size between the rolling rollers 30 and the rotational speed of the rolling rollers according to the thickness of the electrode sensed before the electrode is recovered. At this time, there is no or minimal change in the rotational speed of the rolling rollers 31, 32, and the thickness of the electrode is adjusted by adjusting the gap size. In other words, in the rolling roller control step, each rotational speed of rolling rollers is adjusted so that the main speed ratio, which is the rotating speed ratio, of the rolling rollers on both sides remains constant even if the rotational speed of the rolling rollers is controlled.

That is, the gap size between the rolling rollers 31, 32 controlled in the rolling roller control step and the rotational speed of the rolling rollers 31, 32 are preferably maintained as constant as possible unless there is a large deviation (in the electrode thickness) in order to suppress the occurrence of wrinkles, and even if adjustment is necessary, the adjustment is preferably made to changes smoothly within a minimum range.

In the feedback control step, the electrode film manufacturing step is feedback controlled so that the thickness and supply speed of the electrode film S are adjusted in accordance with the rotational speed (or main speed ratio) of the rolling rollers 31, 32.

In the feedback control step, the thickness of the electrode is controlled by adjusting at least one of the calendering rollers 20 or the sheeting rollers 10 (by adjusting the thickness and density of the electrode film) based on the operating state of the rolling rollers 30.

That is, in the feedback control step, the feedback control unit 40 measures and compares the thickness change on the path along which the electrode film S moves in the electrode film manufacturing step, and determines whether to control the operation of the sheeting rollers 10 or the operation of the calendering rollers 20.

And, the feedback control unit controls the thickness and supply speed of the electrode film by adjusting 'at least one of the gap size between the calendering rollers or the rotational speed of the calendering rollers' or 'at least one of the gap size between the sheeting rollers or the rotational speed of the sheeting rollers'.

In this case, the feedback control unit 40 separately acquires information on the left L gap and the right R gap from each of the sheeting rollers, the calendering rollers, and the rolling rollers, and independently adjusts the left L gap and the right R gap. Accordingly, the occurrence of a difference between the left thickness and the right thickness of the electrode film is prevented.

Meanwhile, as described above, in the present disclosure, the electrode film S may be manufactured as an electrode E2 by being laminated on both sides of the electrode foil F.

That is, the electrode film S includes a first electrode film laminated on one side surface of the electrode foil F with the electrode foil F interposed therebetween, and a second electrode film laminated on the other side surface of the electrode foil.

In this case, in the electrode film manufacturing step, the first electrode film is supplied to one side surface of the electrode foil F at a predetermined speed, and the second electrode film is supplied to the other side surface of the electrode foil at a predetermined speed.

Therefore, in the electrode manufacturing step, the electrode foil F passes between the rolling rollers 31, 32 in a state where the first electrode film and the second electrode film are laminated on each of the one side surface and the other side surface.

And, the electrode film manufacturing step includes a step of sensing at least one of the thickness of the first electrode film before reaching the rolling rollers 30 or the thickness of the second electrode film before reaching the rolling rollers 30. At this time, since the feedback control unit 40 determines which electrode film thickness is to be measured, the determination of whether to adjust the thickness of the first electrode film or the thickness of the second electrode film is made in the feedback control step.

In this embodiment, the feedback control unit 40 senses the thickness of the electrode to adjust the gap size between the rolling rollers, and selects the electrode film that needs to be controlled according to the thickness of the first electrode film or the second electrode film, and controls the sheeting rollers and/or the calendering rollers included in the first electrode film manufacturing device 100 or the second electrode film manufacturing device 200 in accordance with the rotational speed of the rolling rollers 30 (or in accordance with the main speed ratio of the rolling rollers) to adjust the thickness of the electrode film. And, the above process is continuously repeated while the first electrode film or the second electrode film is supplied.

The present disclosure having the above configuration may solve the problem of the occurrence of wrinkles on the electrode foil as compared in FIG. 6 because the rotational speed and main speed ratio of the rolling rollers 31, 32 may be maintained constant even while the electrode film thickness is adjusted.

That is, in the present disclosure, the thickness and density of the electrode film are feedback controlled while the electrode foil and the electrode film are rolled, so that an electrode of constant quality may be manufactured.

In the present disclosure, since feedback control may be performed individually in each of the powder sheeting process in which the electrode film is manufactured from a powder-type mixture and the calendering process in which the thickness of the electrode film is thinned, the thickness and density of the electrode film may be controlled more precisely. In particular, individual automatic correction may be performed by distinguishing an operator side (OS) and a driver side (DS). For example, the left L gap and the right R gap between the rollers based on FIG. 3 may be adjusted independently to more accurately balance the left and right thicknesses of the electrode film.

The present disclosure has been hereinabove described with regard to a limited number of embodiments and drawings, but the present disclosure is not limited thereto and may be embodied in different forms by those having ordinary skill in the technical field pertaining to the present disclosure within the technical aspect of the present disclosure and the scope of the appended claims and their equivalents.

### [List of Reference Numerals]

10: Sheeting roller
20: Calendering roller
30: Rolling roller
40: Feedback control unit
50: Electrode thickness sensor
C: Powder-type mixture
F: Electrode film
E1, E2: Electrode

## Claims

1. A method for manufacturing an electrode, comprising:
an electrode film manufacturing step of manufacturing and supplying a sheet-like electrode film;
an electrode manufacturing step of additionally feeding an electrode foil, and manufacturing an electrode by passing between rolling rollers in a state where the electrode film and the electrode foil are laminated and bonding them to each other;
a rolling roller control step of sensing the thickness of the electrode before the electrode is recovered and controlling at least one of the gap size between the rolling rollers or the rotational speed of the rolling rollers; and
a feedback control step of feedback controlling the electrode film manufacturing step so that the thickness and supply speed of the electrode film are adjusted in accordance with the gap size between the rolling rollers or the rotational speed of the rolling rollers.

2. The method for manufacturing an electrode according to claim 1,
wherein in the electrode film manufacturing step, a powder-type mixture is manufactured into the sheet-like electrode film by passing between sheeting rollers, and
the electrode film manufacturing step comprises:
a calendering step in which the thickness of the sheet-like electrode film is adjusted while the sheet-like electrode film passes between a plurality of calendering rollers; and
in the feedback control step, the thickness and supply speed of the electrode film are controlled by controlling at least one of the gap size between the calendering rollers or the rotational speed of the calendering rollers.

3. The method for manufacturing an electrode according to claim 2,
wherein in the feedback control step, the thickness and supply speed of the electrode film are controlled by controlling the operation of at least one of the gap size between the sheeting rollers or the rotational speed of the sheeting rollers.

4. The method for manufacturing an electrode according to claim 3,
wherein the electrode film manufacturing step comprises:
a step of sensing the thickness of the electrode film after passing through the sheeting rollers and before entering the calendering rollers; and
a step of sensing the thickness of the electrode film and the electrode foil after the electrode film passes through the calendering rollers and before entering the rolling rollers in a state where the electrode film and the electrode foil are laminated.

5. The method for manufacturing an electrode according to claim 4,
wherein in the feedback control step, the thickness change on the path along which the electrode film moves in the electrode film manufacturing step is measured and compared, and
it is determined whether to control the operation of the sheeting rollers or the operation of the calendering rollers.

6. The method for manufacturing an electrode according to claim 2,
wherein the electrode film comprises a first electrode film laminated on one side surface of the electrode foil with the electrode foil interposed therebetween, and a second electrode film laminated on the other side surface of the electrode foil,
wherein in the electrode film manufacturing step, the first electrode film is supplied to one side surface of the electrode foil at a predetermined speed, and the second electrode film is supplied to the other side surface of the electrode foil at a predetermined speed, and
wherein in the electrode manufacturing step, the electrode foil passes between the rolling rollers in a state where the first electrode film and the second electrode film are laminated on each of the one side surface and the other side surface.

7. The method for manufacturing an electrode according to claim 6,
wherein the electrode film manufacturing step comprises:
a step of sensing at least one of the thickness of the first electrode film before reaching the rolling rollers or the thickness of the second electrode film before reaching the rolling rollers, and
in the feedback control step,
it is determined whether to adjust the thickness of the first electrode film or the thickness of the second electrode film.

8. A device for manufacturing an electrode, comprising:
an electrode film manufacturing device comprising sheeting rollers that apply pressure and shear force to a powder-type mixture to process it into a sheet-like electrode film when the powder-type mixture is fed and calendering rollers that apply pressure to the electrode film passing through the sheeting rollers to process it to a target thickness;
a rolling roller that applies pressure to an electrode foil and the electrode film manufactured and supplied by the electrode film manufacturing device so that they are bonded when supplied in a laminated state to manufacture them into an electrode; and
a feedback control unit that receives data from an electrode thickness sensor disposed before the electrode reaches a recovery unit and sensing the thickness of the electrode, and controls the gap size between the rolling rollers and the rotational speed of the rolling rollers,
wherein the feedback control unit feedback controls the electrode film manufacturing device so that the thickness and supply speed of the electrode film are adjusted in accordance with the gap size between the rolling rollers and the rotational speed of the rolling rollers.

9. The device for manufacturing an electrode according to claim 8,
wherein the feedback control unit may individually control the gap size between the sheeting rollers and the rotational speed of the sheeting rollers, and the gap size between the calendering rollers and the rotational speed of the calendering rollers.

10. The device for manufacturing an electrode according to claim 8,
wherein the electrode film manufacturing device, so that the electrode film is individually supplied from each of both sides with the electrode foil interposed therebetween, comprises:
a first electrode film manufacturing device that manufactures and supplies a first electrode film laminated on one side surface of the electrode foil; and
a second electrode film manufacturing device that manufactures and supplies a second electrode film laminated on the other side surface of the electrode foil,
wherein the first electrode film manufacturing device and the second electrode film manufacturing device are disposed on one side and the other side of the rolling rollers, respectively, with the rolling rollers interposed therebetween.

11. The device for manufacturing an electrode according to claim 10,
wherein the first electrode film manufacturing device comprises first electrode film thickness sensors that sense the thickness of the first electrode film, and
the second electrode film manufacturing device comprises second electrode film thickness sensors that sense the thickness of the second electrode film,
wherein each of the first electrode film thickness sensors and the second electrode film thickness sensors is connected to the feedback control unit to enable data transmission.

12. The device for manufacturing an electrode according to claim 11,
wherein the first electrode film thickness sensor comprises:
a front first electrode film thickness sensor that senses the thickness of the first electrode film after passing through the sheeting rollers and before entering the calendering rollers, and
a rear first electrode film thickness sensor that senses the thickness of the first electrode film and the electrode foil after the first electrode film passes through the calendering rollers and before entering the rolling rollers in a state where the first electrode film and the electrode foil are laminated.

13. The device for manufacturing an electrode according to claim 11,
wherein the second electrode film thickness sensor comprises:
a front second electrode film thickness sensor that senses the thickness of the second electrode film after passing through the sheeting rollers and before entering the calendering rollers; and
a rear second electrode film thickness sensor that senses the thickness of the second electrode film after passing through the calendering rollers and before entering the rolling rollers.
